# EUROPEAN PATENT APPLICATION

(11) **EP 2 644 998 A2**
(43) Date of publication of application: **02.10.2013**
(21) Application number: 13160904.2
(22) Date of filing: 25.03.2013
(51) Int. Cl.: F23R 3/26, F23R 3/28, F23C 9/08

(54) **System and method of improving emission performance of a gas turbine**

(30) Priority: 30.03.2012 US 201213435005
(71) Applicant: General Electric Company, Schenectady, New York 12345 (US)
(72) Inventor: Elkady, Ahmed Mostafa, Niskayuna, NY New York 12309 (US); Evulet, Andrei Tristan, Niskayuna, NY New York 12309 (US); Dean, Anthony John, Niskayuna, NY New York 12309 (US)
(74) Representative: Cleary, Fidelma

(57) **Abstract**

A power generation system (10) and method of generating power with reduced NOₓ emission includes a gas turbine system (15). The turbine system (15) includes a compressor (16) configured to receive a feed oxidant stream (14) and supply a compressed oxidant stream (18) to a combustion chamber (20) and an expander (24) configured to receive a discharge stream (22) from the combustion chamber (20) and generate an exhaust stream (30) comprising carbon dioxide and electrical energy. The system (10) further includes an exhaust gas recirculation system (54) configured to generate a recycle stream (52), wherein the recycle stream (52) is mixed with a fresh oxidant (12) to generate the feed oxidant stream (14). The exhaust gas recirculation system (54) includes an exhaust gas recirculation control loop (60) to control a pilot ratio (diffusion to total fuel ratio) based on received feedback related to combustion parameters. The control loop (60) is configured to control the pilot ratio required to keep NOₓ in its minimum ratios with improved flame stability.

## Description

The disclosure relates generally to emission reduction and more particularly, to emission reduction in gas turbine engines.

Oxides of Nitrogen (NOₓ) are major pollutants found inherently in an exhaust gas stream of combustion engines. They are known to cause acid rains that are harmful to living organisms. Several emission reduction technologies, such as, but not limited to, dry low NOₓ (DLN) combustion when operated at fully premixed mode, exhaust gas recirculation (EGR), steam addition in diffusion combustion, reheat combustion and selective catalytic reduction (SCR) have been employed to reduce NOₓ emissions.

In dry low NOₓ (DLN) premixed combustion, for example, a feed oxidant stream is mixed with a fuel prior to being introduced into a combustor. In such a case, the fuel is uniformly mixed with combustion air and excess air available helps to keep the flame temperatures low. Low flame temperatures in turn reduce NOₓ formation.

Exhaust Gas Recirculation (EGR) has been an attractive method for NOₓ reduction especially in internal combustion engines or furnace applications where fuel and air are usually burned in diffusion or partially premixed mode. In exhaust gas recirculation (EGR), a part of an exhaust gas stream is re-circulated back into the feed oxidant stream, effectively reducing oxygen concentration in the feed oxidant stream. Lack of excess oxygen in the combustor reduces the formation of NOₓ.

Steam addition into a diffusion flame quenches the diffusion flame temperatures to a desirable limit, thus reducing the formation of NOₓ. In Selective Catalytic Reduction (SCR), a reduction agent like ammonia, for example, is employed to reduce the oxides of nitrogen in exhaust gas stream into elemental nitrogen.

However, employing the aforementioned emission reduction technologies reduce NOₓ concentration in exhaust gas stream. With the growing concern for cleaner environment and stricter emission regulations, further reduction of NOₓ concentration in exhaust gas streams of combustion engines is highly desirable.

Therefore, there is a need for improved emission reduction technologies that addresses one or more of the aforementioned issues.

In accordance with a first aspect, the invention resides in a power generation system. The system includes a gas turbine system and an exhaust gas recirculation system. The gas turbine system including a combustion chamber, a compressor, and an expander. The combustion chamber is configured to combust a fuel stream. The compressor is configured to receive a feed oxidant stream and supply a compressed oxidant stream to the combustion chamber. The expander is configured to receive a discharge stream from the combustion chamber and generate an exhaust stream comprising carbon dioxide and electrical energy. The exhaust gas recirculation system including a heat recovery steam generator and an exhaust gas recirculation loop. The heat recovery steam generator is configured to receive the exhaust stream and generate a recycle stream, wherein the recycle stream is mixed with a fresh oxidant to generate the feed oxidant stream. The exhaust gas recirculation control loop is configured to receive feedback related to at least one of a load pressure, a percentage of exhaust gas recirculation, emissions of NOₓ and CO₂ at an exit of the combustor and a firing temperature in the combustion chamber to control a pilot ratio of the feed oxidant stream.

In accordance with another aspect, the invention resides in a power generation system. The system includes a gas turbine system and an exhaust gas recirculation control loop. The gas turbine system including a combustion chamber, and a compressor, and expander. The combustion chamber is configured to combust a fuel stream. The compressor is configured to receive a feed oxidant stream and supply a compressed oxidant stream to the combustion chamber. The expander is configured to receive a discharge stream from the combustion chamber and generate an exhaust stream comprising carbon dioxide and electrical energy. The exhaust gas recirculation system including a splitter, a heat recovery steam generator and an exhaust gas recirculation control loop. The splitter is configured to split the exhaust stream into a first split stream and a second split stream. The heat recovery steam generator is configured to receive the first split stream and generate a cooled first split stream, wherein a portion of the cooled first split stream is mixed with the second split stream to generate a recycle stream, and wherein the recycle stream is mixed with the fresh oxidant to generate the feed oxidant stream. The exhaust gas recirculation control loop is configured to receive feedback related to at least one of a load pressure, a percentage of exhaust gas recirculation, emissions of NOₓ and CO₂ at an exit of the combustor and a firing temperature in the combustion chamber to control a pilot ratio of the feed oxidant stream.

In accordance with another aspect, the invention resides in a method of generating power with reduced NOₓ emission. The method includes compressing a feed oxidant and generating a compressed oxidant stream in a compressor, combusting a fuel stream and the compressed oxidant stream in a combustion chamber and generating a discharge stream, expanding the discharge stream from the combustion chamber and generating an exhaust stream comprising carbon dioxide and electrical energy, recovering heat from the exhaust stream and generating a recycle stream, mixing the recycle stream with a fresh oxidant and generating the feed oxidant stream and controlling a pilot ratio based on feedback regarding a plurality of combustor parameters received by a model based control of an exhaust gas recirculation control loop.

Other objects and advantages of the present disclosure will become apparent upon reading the following detailed description and the appended claims with reference to the accompanying drawings. These and other features and improvements of the present application will become apparent to one of ordinary skill in the art upon review of the following detailed description when taken in conjunction with the several drawings and the appended claims.

The above and other features, aspects, and advantages of the present disclosure will become better understood when the following detailed description is read with reference to the accompanying drawings in which like characters represent like parts throughout the drawings, wherein:
FIG. 1 is a block diagram representation of an exemplary emission performance improvement system for a gas turbine engine including an exhaust gas recirculation control loop in accordance with an embodiment;
FIG. 2 is an exemplary graphical representation illustrating CO₂ concentration trend at different levels of exhaust gas recirculation;
FIG. 3 is an exemplary graphical representation illustrating NOₓ concentration trend at different levels of exhaust gas recirculation with piloted combustion;
FIG. 4 is an exemplary graphical representation illustrating the effect of CO₂ oxidizer on NOₓ production at low pressure in a perfectly premixed combustion;
FIG. 5 is an exemplary graphical representation illustrating the effect of CO₂ oxidizer on NOₓ production at atmospheric pressure in a perfectly premixed combustion;
FIG. 6 is an exemplary graphical representation illustrating the effect of exhaust gas recirculation on NOₓ production at low pressure;
FIG. 7 is an exemplary graphical representation illustrating the effect of exhaust gas recirculation on NOₓ production at high pressure;
FIG. 8 is an exemplary graphical representation illustrating the effect of pressure on NOₓ production at 35% exhaust gas recirculation.
FIG. 9 is an exemplary graphical representation illustrating the effect of increasing pressure on NOₓ production at 35% exhaust gas recirculation and at fixed CO₂ percentage levels in the oxidizer.

As described in detail below, embodiments of the present disclosure provide a system for improving emission performance and a method for operating a gas turbine to reduce oxides of nitrogen (NOₓ) emission in an exhaust gas stream of a gas turbine. The term "improving emission performance" used herein refers to reduction of NOₓ concentration in the exhaust gas stream of the gas turbine. The term "EGR" refers to exhaust gas recirculation in a gas turbine engine. In exhaust gas recirculation, a portion of the exhaust from the gas turbine is re-circulated into the inlet of the turbine, which portion of the exhaust is blended with fresh oxidant such as air before being introduced to the combustion chamber of the turbine system. As a result the blended oxidant used for combustion has lower oxygen content when compared to a conventional oxidant and results in low NOₓ emission in the discharge from the combustion chamber. Additionally, the carbon dioxide generated in the combustion process is concentrated as a portion of the exhaust gas is re-circulated back to the turbine system which recirculation enhances the CO₂ separation processes downstream.

As previously stated, exhaust gas recirculation has been an attractive method for NOₓ reduction in applications where fuel and air are usually burned in diffusion or partially premixed modes. Exhaust gas recirculation has now been determined as a short term path for CO₂ capture power plants. Utilizing exhaust gas recirculation in a gas turbine application has been found to increase CO₂ concentration at the stack leading to a reduced separation cost and smaller separation equipment. On the other hand, gas turbines utilizing DLN combustion systems are well known for their low emissions especially when operated at fully premixed mode. As disclosed herein, integration of exhaust gas recirculation with a DLN combustion system may lead to further NOₓ reduction.

The present system provides a combined DLN/EGR system with the addition of an exhaust gas recirculation control loop to recirculate a portion of an exhaust gas stream back into a compressor inlet of the gas turbine, wherein the exhaust gas recirculation control loop controls pilot ratios based on received feedback of EGR%, firing temperatures and load pressures. The ability to control these factors provides improved flame stability and maintaining NOₓ emissions to minimum values.

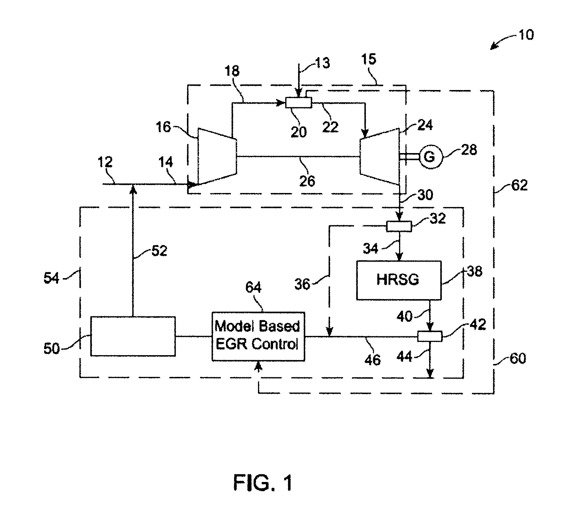

Turning now to the drawings, FIG. 1 illustrates an exemplary power generation system 10 having a gas turbine system 15. The gas turbine system 15 includes a combustion chamber 20 configured to combust a fuel stream 13 and a compressor 16 configured to receive a feed oxidant stream 14 and supply a compressed oxidant stream 18 to the combustion chamber 20. The turbine system 15 further includes an expander 24 configured to receive a discharge stream 22 from the combustion chamber 20 and generate an exhaust stream 30 comprising carbon dioxide and electrical energy through a generator 28. The compressor 16 and the expander 24 are typically coupled through a common shaft 26. The power generation system 10 further includes an exhaust gas recirculation (EGR) system 54 that may optionally be configured as a retrofitable unit. The exhaust gas recirculation system 54 comprising a splitter 32 configured to split the exhaust stream 30 into a first split stream 34 and a second split stream 36. The exhaust gas recirculation system 54 also includes a heat recovery steam generator (HRSG) 38 (which is part of a combined cycle plant, not shown) configured to receive the first split stream 34 and generate a cooled first split stream 40. In an embodiment, a purification system 50 is configured to receive the first cooled split stream 40 and the second split stream 36 and generate a recycle stream 52. In operation, the recycle stream 52 is mixed with fresh oxidant 12 to generate the feed oxidant stream14.

It is understood that the compressed oxidant stream 18 from the compressor 16 may comprise any suitable gas containing oxygen, such as for example, air, oxygen rich air and oxygen-depleted air. The combustion process in the combustion chamber 20 generates the discharge stream 22.

As illustrated, the discharge stream 22 from the combustion chamber 20 may be introduced into the expander 24. As indicated, the power generation system 10 includes a generator 28 attached to the turbine system 15. The thermodynamic expansion of the hot discharge stream 22 fed into the expander 24 produces power to drive the gas turbine system 15, which, in turn, generates electricity through the generator 28. In this embodiment, electricity from the generator 28 may be converted to an appropriate form and is provided to a distribution power supply network grid (not shown). The expanded exhaust stream 30 from the expander 24 may be fed into the splitter 32. In one embodiment, the splitter 32 is a Coanda ejector enhancing the splitting of the exhaust stream into the first split stream 34 and the second split stream 36. The HRSG 38 is used for recovering the heat content of the first split stream 34 to generate steam. The temperature of the exhaust stream 30 is at about 700 °F to about 1100 °F and the cooled first split stream 40 is at a temperature of about 60 °F to about 200 °F.

In one embodiment, the exhaust gas recirculation system 54 further includes a first control valve 42 configured to release a portion of the cooled first split stream 40 as an output stream 44. More particularly, the HRSG 38 extracts heat from the first split stream 34 of the exhaust stream 30 to generate steam as the output stream 44. In one embodiment the output stream 44 is released to atmosphere and in another embodiment, the output stream 44 is sent to a CO₂ separation unit (not shown) to separate CO₂ before being released to atmosphere. A remaining portion 46 of the cooled first split stream 40 is mixed with the second split stream 36 to generate a mixed exhaust stream 48. The exhaust gas recirculation system 54 recirculates a portion of the exhaust stream 30, and more particularly circulates the mixed exhaust stream 48, to the compressor 16 of the gas turbine 15, to reduce concentration of oxygen by about 5% in the compressed feed oxidant stream 18 into the combustor 20 of the gas turbine 15. In one embodiment, the exhaust gas recirculation system 54 recirculates less than about 50% of the exhaust stream 30. In an embodiment, the exhaust gas recirculation system 54 may further include a cooler (not shown) to cool the mixed exhaust stream 48. Water present in the mixed exhaust stream 48 is condensed in the cooler by a reduction in temperature of the mixed exhaust stream 48. The term "HRSG" used herein refers to heat recovery steam generator 38 that recovers heat from the exhaust stream 30 to generate steam as the output stream 44. The steam is typically directed to a steam turbine (not shown) to extract additional work.

Prior to recirculation into the compressor 16, the mixed exhaust stream 48 may be sent to the purification unit 50. The purification unit 50 is configured to remove contaminants such as moisture, particulates and acid gases from the mixed exhaust stream 48 before recycling it back to the inlet of the compressor 16 as a recycle stream 52. Impurities and moisture content in the exhaust gas 30 prevent utilization of a simple recirculation loop to accomplish the CO₂ concentration. Direct recirculation of a portion of an exhaust from a turbine system may result in turbine failing and accelerated wear of internal components due to the presence of certain impurities such as particles and acid gases in an exhaust stream. Therefore the presence of the purification unit 50 may enhance the removal of contaminants such as water vapor, acid gases, aldehydes and hydrocarbons and reduces chances of accelerated corrosion and fouling in the internal components of the gas turbine system 15. As shown in Fig. 1, the recycle stream 52 is mixed with the fresh oxidant 12 to generate the feed oxidant 14 for the compressor 16. This recycling operation generally increases the CO₂ concentration in the compressed oxidant stream 18 and subsequently in the exhaust stream 30.

In a perfectly premixed combustion, the exhaust gas recirculation system 54 is not always working for the benefit of NOₓ emission reduction and regions exist where an optimization analysis is needed. Accordingly, an exhaust gas recirculation control loop 60 is included in the system 10 to further reduce NOₓ emissions. The inclusion of the exhaust gas recirculation control loop 60 will better ensure that when an exhaust gas recirculation system is integrated into the DLN system, the NOₓ emissions will be kept at minimum levels at part loads. In an embodiment, the exhaust gas recirculation control loop 60 comprises a model based control (MBC) 64 in feedback communication 62 with the combustor 20, wherein the model based control 64 is configured to receive feedback with regard to combustion dynamics and combustion instabilities in the combustor 20. The model based control 64 is further configured to control (adapt) the EGR % in response to the received feedback to provide lower NOₓ emissions and/or avoid out of compliance conditions.

Experimental results show that NOₓ production is sensitive to the CO₂ percentage in the recycle stream 52, as well as the pressure in the combustion chamber 20. It has been found that by incorporating the exhaust gas recirculation control loop 60 into the power generation system 10, further NOₓ reductions may be obtained at full load conditions with the power generation system 10 operation at higher than 150 psi. The exhaust gas recirculation control loop 60 further improves flame stability margins due to lower O₂ concentrations in lean premixed systems, decreasing the probability of lean blowout (LBO) at part loads. In an embodiment, the exhaust gas recirculation control loop 60, and more particularly the model based control 64, is configured to receive feedback of at least one combustion parameter, and in a preferred embodiment to receive feedback of a plurality of combustion parameters. More specifically, the exhaust gas recirculation control loop 60 is configured to control pilot ratios

(diffusion to total fuel ratio) based on received feedback related to EGR%, firing temperatures, emissions of NOₓ and CO₂ at exit of the combustor and load pressure within the combustion chamber 20, thereby improving the flame stability and keeping NOₓ emissions to minimum values. The exhaust gas recirculation control loop 60 utilizes combustion information regarding pressure, EGR%, emissions of NOₓ and CO₂ at exit of the combustor and firing temperature and determines the pilot ratio required to keep the NOₓ emission in its minimum ratios with improved flame stabilization.

The exhaust gas recirculation system 54 may further utilize an additional integrated control system (not shown). The control system integrates the operation of each unit in the exhaust gas recirculation system 54 to further achieve optimum performance of the power generation system 10. In one embodiment, the control system may be driven by a continuous monitoring system (not shown in Figures). The continuous monitoring system measures the constituents in the recycle stream 52 and provides feedback to the control system. Based on this feedback, the control system may further adjust parameters including but not limiting to quench recirculation rate, sorbent injection rate in quench unit, and gas temperatures at several location in the exhaust gas recirculation system 54. The control system may further optimize gas temperature at key locations in the exhaust gas recirculation system 54 to ensure most efficient cooling. In an embodiment, the exhaust gas recirculation control loop 60 may provide the control of these additional parameters in the exhaust gas recirculation system 54 to achieve an optimum performance of the power generation system 10.

In operation, NOₓ formation increases exponentially with the flame temperature and proportionally with the availability of oxygen in the combustor 20. The exhaust gas recirculation system 54 recirculates a portion of the exhaust stream 30 as the recycle stream 52 into the compressor 16 to reduce oxygen content in the feed oxidant stream 14 by about 5%. Due to combustion of the fuel stream 13 and the compressed oxidant stream 18 in the combustor 20 the oxygen content is depleted in the exhaust stream 30. Once the mixed exhaust stream 48 is mixed with the feed oxidant stream 14, the oxygen content in the mixture is lower in comparison to the oxygen content in a plain feed oxidant stream. This reduction in the oxygen content helps to reduce the formation of NOₓ in the combustor 20, for example by between about 70% to about 80%.

The use of the exhaust gas recirculation control loop 60 may provide further reduction in the NOₓ emissions and may increase the concentration of carbon dioxide in the recycle stream 52. In a particular embodiment, the recirculation of the exhaust gas 30 increases the concentration of carbon dioxide by about 10%. In carbon capture and sequestration the carbon dioxide from the exhaust stream 30 is separated and is either stored in geological formations, deep in the oceans or converted into mineral carbonates. Carbon capture and sequestration techniques are more efficient and cost effective with increase in carbon dioxide concentration in the exhaust stream 30. In an exemplary embodiment, as illustrated herein, the exhaust gas stream 40 from the outlet of the HRSG 38 may be passed through a carbon capture system (not shown) to reduce the amount of carbon dioxide rejected with the exhaust gas stream 44 into the atmosphere. In another exemplary embodiment, an exhaust gas recirculation mixer (not shown) may be provided to mix the recycle stream 52 with the feed oxidant stream 14.

The fuel stream 13 may include any suitable hydrocarbon gas or liquid, such as natural gas, methane, naphtha, butane, propane, syngas, diesel, kerosene, aviation fuel, coal derived fuel, bio-fuel, oxygenated hydrocarbon feedstock, and mixtures thereof, and so forth. In one embodiment, the fuel is primarily natural gas (NG) and, therefore, the discharge stream 22 from the combustion chamber 20 may include water, carbon dioxide (CO₂), carbon monoxide (CO), nitrogen (N₂) Nitrogen oxides (NOₓ), unburned fuel, and other compounds.

The exhaust gas recirculation system 54, including the exhaust gas recirculation control loop 60, may be configured as a retrofitable unit for retrofitting into any existing gas turbines to achieve higher concentration of CO₂ in the working fluid in the turbine system and also to lower NOₓ emissions. Reduced NOₓ emission from the combustion chamber 20 is achieved due to several factors: (i) decrease in oxygen content in the compressed oxidant 18 as fresh air 12 is mixed with the recycle stream 52 comprising depleted oxygen levels; and (ii) adjustments to the pilot ratio based on feedback regarding combustion load pressure, EGR% and firing temperatures received by the exhaust gas recirculation control loop 60.

Exhaust gas recirculation (EGR) in combination with the exhaust gas recirculation control loop is effectively used in the present techniques to increase CO₂ level in the exhaust and reduce NOₓ at the same time by adjusting pilot ratios based on combustion parameters. NOₓ treatment in any combustion process is typically achieved by selective catalytic reduction (SCR) and/or using a pre-mixed combustion process. The present techniques provide slight modifications to the gas turbines including an exhaust gas recirculation system that may be applied to existing systems as a retrofit and minor modification of the combustion nozzles to allow a more flexible operation and controlling of multiple combustion parameters to achieve low NOₓ formation and higher CO₂ level in the exhaust. In one embodiment, as stated earlier, the portion of the output stream 44 is directed to the CO₂ separation unit (not shown). Any CO₂ separation technology may be involved (for example amine treatment, PSA, membrane, etc.). After separating the CO₂ rich stream may be directed to a CO₂ conditioning system, including a CO₂ compression system. The increase in CO₂ concentration in the exhaust stream from the turbine system enhances the efficiency of the CO₂ separation process.

Data compiled in a combined DLN/EGR system, utilizing a DLN nozzle with capability to operate in both a perfectly premix mode and a partially premix mode, and including an exhaust gas recirculation control loop as described herein, is provided. Exhaust gas recirculation was produced using a fuel blending station. Data results show that in a perfectly premix combustion, exhaust gas recirculation is affected by the following parameters: (i) percentage of CO₂ in the oxidizer; (ii) pressure on the exhaust gas recirculation process; (iii) fully premixed combustion vs pilot (1-3% diffusion) affecting lean blow-out; (iv) nozzle mixing; and (v) oxygen content in the exhaust. The inclusion of the exhaust gas recirculation control loop in the power generation system as disclosed herein provides the ability to determine the optimum regions of operation and control the pilot ratio in response to feedback regarding such combustion parameters, and thereby achieve low NOₓ emissions. In an attempt to determine the optimum regions of operation via the exhaust gas recirculation control loop in the exhaust gas recirculation process, there is a need to map exhaust gas recirculation at varying times, pressures and pilot ratios.

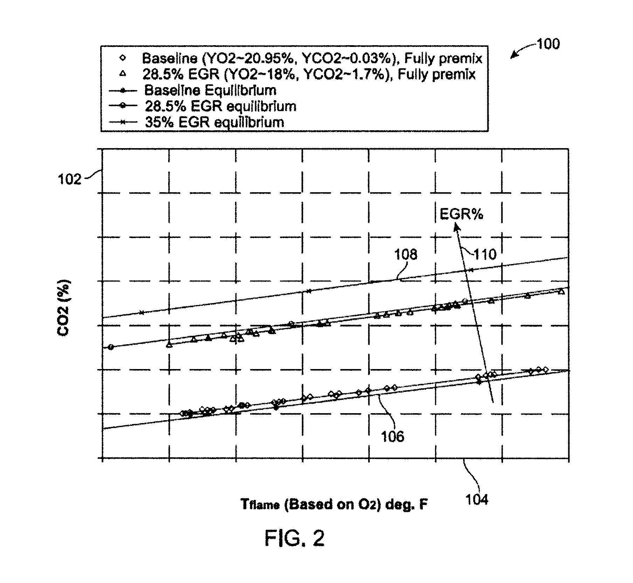

Referring more specifically to FIG. 2, shown in an exemplary graphical representation 100 are the trends in concentration of carbon dioxide (plotted in 102) with varying flame temperature (plotted in axis 104) and exhaust gas recirculation. More specifically, FIG. 2 shows the CO₂ level in the exhaust gas 30 as a function of the flame temperature in the combustion chamber 20 at different levels of exhaust gas recirculation. As the exhaust gas recirculation increases from 0% (shown by line 106) to 40% (shown by line 108) along the arrow 110 indicating the increase in EGR%, the concentration of CO₂ increases as larger portions of the mixed exhaust stream 48 are recycled back into the inlet of the compressor as the recycle stream 52. The results clearly show an increase in CO₂ levels at the stack, with an increase in exhaust gas recirculation percentage, using the exhaust gas recirculation system including the exhaust gas recirculation control loop as described above.

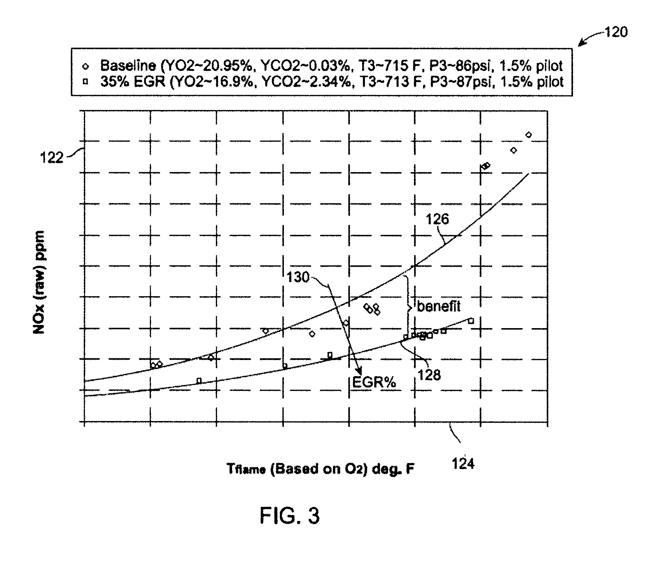

FIG. 3 is an exemplary graphical representation 120 illustrating the trends in concentration of nitrogen oxide (plotted in axis 122) with varying flame temperature (plotted in axis 124) and exhaust gas recirculation with a nozzle operating with 1.5% pilot ratio. More specifically, FIG. 3 shows the NOₓ level in the exhaust gas 30 as a function of the flame temperature in the combustion chamber 20 at different levels of exhaust gas recirculation. As the exhaust gas recirculation decreases from a baseline percentage (shown by line 126) to 35% (shown by line 128) along the arrow 130, the concentration of NOₓ decreases as larger portions of exhaust are recycled back into the inlet of the compressor as the recycle stream 52. It is clear from FIG. 3 that at a fixed flame temperature (for example, 2900 °F) as the exhaust gas recirculation decreases (as represented by arrow 130) the NOₓ formation reduces. The results clearly show a decrease in NOₓ levels with a decrease in exhaust gas recirculation percentage with the nozzle operating with 1.5% pilot ratio and utilizing the exhaust gas recirculation system including the exhaust gas recirculation control loop as described above.

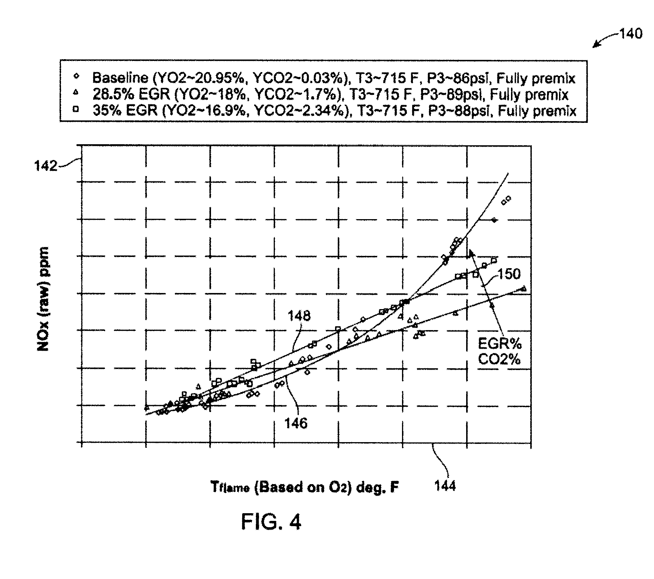

FIG. 4 is an exemplary graphical representation 140 illustrating the trends in concentration of nitrogen oxide (plotted in axis 142) with varying flame temperature (plotted in axis 144) and exhaust gas recirculation when carried out at 85psi in fully premixed mode. More specifically, FIG. 4 shows the NOₓ level in the exhaust gas 30 as a function of the flame temperature in the combustion chamber 20 at different levels of exhaust gas recirculation. As the exhaust gas recirculation and CO2 increase from 0% (shown by line 146) to 35% (shown by line 148) along the arrow 150, the concentration of NOₓ increases as larger portions of exhaust are recycled back into the inlet of the compressor as the recycle stream 52. Increasing the EGR% raises the amount of CO₂ in the oxidizer, which may participate in the kinetic reactions of NOₓ production.

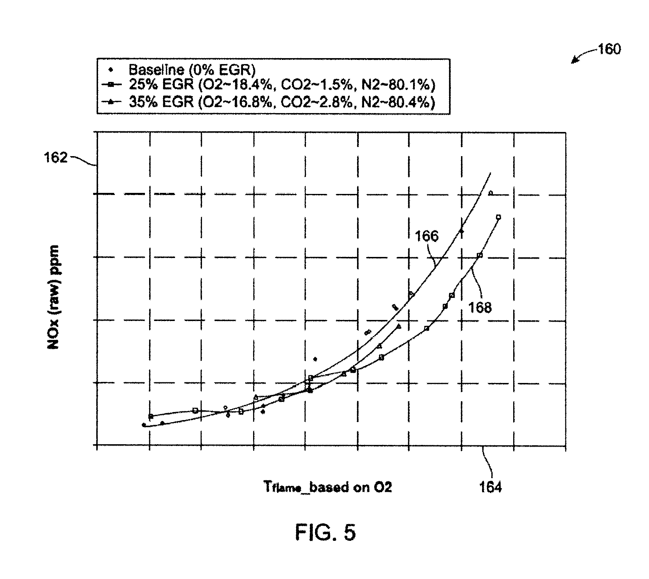

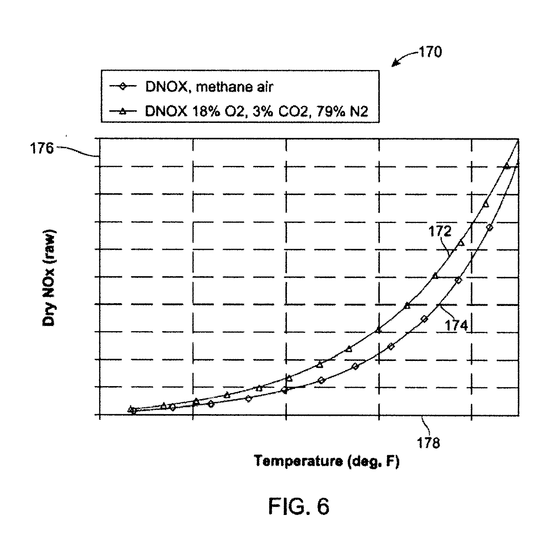

During an initial atmospheric pressure experiment to validate the effect of CO₂ on NOₓ production in a perfectly premixed combustion a similar trend was obtained as depicted in FIG. 5. More specifically, FIG. 5 is an exemplary graphical representation 160 illustrating the trends in concentration of nitrogen oxide (plotted in axis 162) with varying flame temperature based on O₂ (plotted in axis 164) when carried out at atmospheric pressure. As exhaust gas recirculation increases from 10% (shown by line 166) to 35% (shown by line 168), the concentration of NOₓ in the emissions increases as larger portions of exhaust are recycled back into the inlet of the compressor as the recycle stream 52. FIG. 5 illustrates that an oxidizer containing about 3% CO₂ produces more NOₓ as compared to an oxidizer containing 1.5% CO₂. Software was utilized to model the same experiment conditions, and the results as illustrated in FIG. 6 in an exemplary graphical representation 170 showed that CO₂ (shown by line 172) as a constituent of the oxidizer leads to more NOₓ production (plotted in axis 176) with varying flame temperature (plotted in axis 178) as compared to the same conditions when air is being used as the oxidizer (shown by line 174). These results validate the findings that CO₂ is not an inert and participates in the chemical reactions in the flame zone.

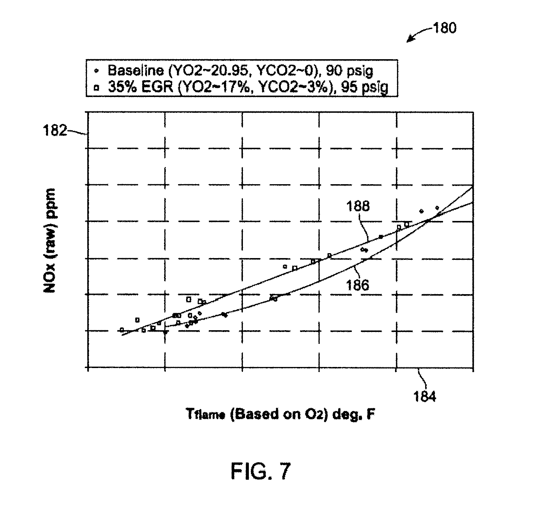

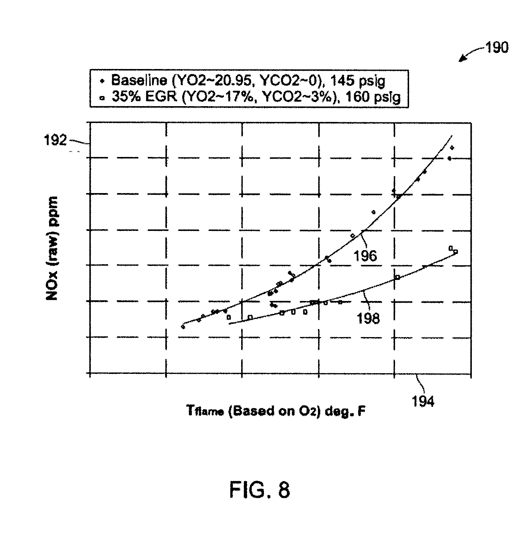

Additionally, the effect of pressure at fixed CO₂ percentage in the oxidizer was studied and results showed that pressure plays an important role. It has been known that pressure has a relation to NOₓ production in the form NOₓ ∼(P2/P1)^m where m is in the range of 0.4. FIG. 7 is an exemplary graphical representation 180 illustrating the trends in concentration of nitrogen oxide (plotted in axis 182) with varying flame temperature (plotted in axis 184) and exhaust gas recirculation at fixed CO₂ percentage levels and at a low pressure of 90-95psig. FIG. 8 is an exemplary graphical representation 190 illustrating the trends in concentration of nitrogen oxide (plotted in axis 192) with varying flame temperature (plotted in axis 194) and exhaust gas recirculation at fixed CO₂ percentage levels and at a high pressure of 145-160psig. More specifically, referring again to FIG. 7, illustrated is the NOₓ level in the exhaust gas 30 as a function of the flame temperature in the combustion chamber 20 and the effect of pressure at fixed CO₂ percentage levels in the oxidizer. As the exhaust gas recirculation increases from 0% (shown by line 186) at a pressure of 90psig to 35% (shown by line 188) at a pressure of 95psig, the concentration of NOₓ increases as larger portions of exhaust are recycled back into the inlet of the compressor as the recycle stream 52. Increasing the EGR% at low pressures only slightly raises the amount of NOₓ. Referring again to FIG. 8, as the exhaust gas recirculation increases from 0% (shown by line 196) at a pressure of 145psig to 35% (shown by line 198) at a pressure of 160psig, the concentration of NOₓ increases as larger portions of exhaust are recycled back into the inlet of the compressor as the recycle stream 52. Accordingly, increasing the EGR% at high pressures substantially decreases the amount of NOₓ emissions in the recycle stream.

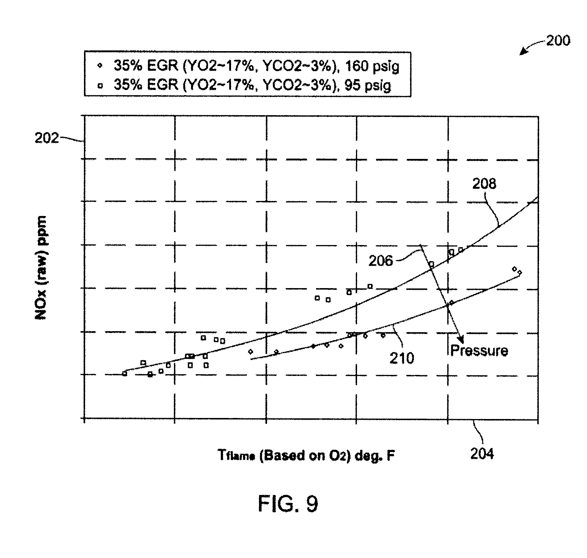

When CO₂ is present, increasing combustion pressure in a perfect premix mode has an opposite effect on NOₓ production. This phenomenon could be explained as increasing pressure suppresses the CO₂ kinetics with NOₓ production. FIG. 9 is an exemplary graphical representation 200 illustrating the trends in concentration of nitrogen oxide (plotted in axis 202) with varying flame temperature (plotted in axis 204) and exhaust gas recirculation in the presence of CO₂ and under decreasing pressure (shown by line 206) in a perfect premix mode. FIG. 9 illustrates the NOₓ level in the exhaust gas 30 as a function of the flame temperature in the combustion chamber 20 and the effect of increasing pressure at fixed CO₂ percentage levels in the oxidizer. As the pressure increases from 95psig (shown by line 208) to 160psig (shown by line 210) the concentration of NOₓ decreases as larger portions of exhaust are recycled back into the inlet of the compressor as the recycle stream 52. Results show increasing the pressure suppresses the CO₂kinetics with NOₓ production.

The power generation systems described herein include an exhaust gas recirculation unit, including an exhaust gas recirculation control loop, which may be implemented as a retrofit for turbines that need to comply with lower levels of NOx formation, as well as allowing more effective CO₂ separation, in situations where CO₂ separation is required. The exhaust gas recirculation system disclosed herein is an option for power generation with exhaust that is CO₂-lean and has a lower NOₓ level than NOₓ levels typically observed in a combustion process. The exhaust gas recirculation control loop provided in all the embodiments described herein provides optimization analysis to minimize NOₓ production and improve flame stability at part load conditions. In addition, the exhaust gas recirculation control loop addresses the effect of CO₂ on NOₓ production. Through the understanding of CO₂ effects and its dependence on combustion pressure on either enhancing or suppressing its role on NOₓ production, the exhaust gas recirculation control loop disclosed herein receives feedback related to pressure, EGR% and firing temperature and decides the pilot ratio required to keep NOₓ in its minimum ratios with improved flame stability. The inclusion of the exhaust gas recirculation system, including the control loop disclosed herein, with a gas turbine system in a power generation system, provides significant simplification of the system in achieving lower NOₓ emissions, such as in the form of cost reduction and increased reliability.

While only certain features of the disclosure have been illustrated and described herein, many modifications and changes will occur to those skilled in the art. It is, therefore, to be understood that the appended claims are intended to cover all such modifications and changes as fall within the true spirit of the disclosure.

## Claims

1. A power generation system (10) comprising:
a gas system (15) comprising:
a combustion chamber (20) configured to combust a fuel stream (13);
a compressor (16) configured to receive a feed oxidant stream (14) and supply a compressed oxidant stream (18) to the combustion chamber (20); and
an expander (24) configured to receive a discharge stream (22) from the combustion chamber (20) and generate an exhaust stream (30) comprising carbon dioxide and electrical energy; and
an exhaust gas recirculation system (54) comprising:
a heat recovery steam generator (38) configured to receive the exhaust stream (30) and generate a recycle stream (52), wherein the recycle stream (52) is mixed with a fresh oxidant (12) to generate the feed oxidant stream (14); and
an exhaust gas recirculation control loop (60) configured to receive feedback related to at least one of a load pressure, a percentage of exhaust gas recirculation and a firing temperature in the combustion chamber (20) to control a pilot ratio of the feed oxidant stream (14).

2. The system of claim 1, wherein the gas turbine system (15) operates in a partially premix mode.

3. The system of claim 1, wherein the gas turbine system (15) operates in a perfectly premix mode.

4. The system of any of claims 1 to 3, wherein the exhaust gas recirculation control loop (60) is configured to minimize NOₓ production and improve flame stability at part load conditions.

5. The system of any of claims 1 to 4, wherein up to 50% of the exhaust stream (30) is recycled back to the compressor (16).

6. The system of any preceding claim, further comprising a splitter (32) configured to split the exhaust stream into a first split stream (34) and a second split stream (36) and wherein the splitter (32) comprises a Coanda ejector.

7. The system of claim 6, wherein the heat recovery steam generator (38) is configured to receive the first split stream (34) and generate a cooled first split stream (40).

8. The system of claim 7, wherein the cooled first split stream (40) and the second split stream (36) generate the recycle stream (52).

9. The system of any preceding claim, wherein the exhaust gas recirculation control loop (60) comprises a model base control configured to receive combustion parameter feedback.

10. The system of any preceding claim, wherein the fuel is selected from the group consisting of natural gas, methane, methanol, ethanol, ethane, liquid petroleum gas (LPG), naphtha, butane, propane, diesel, kerosene, an aviation fuel, a coal derived fuel, a bio-fuel, gas oil, crude oil, an oxygenated hydrocarbon feedstock, refinery off gas, associated gas and mixtures thereof.

11. A method of generating power with reduced NOₓ emission comprising:
compressing a feed oxidant (14) and generating a compressed oxidant stream (18) in a compressor (16) of a gas turbine system (15);
combusting a fuel stream (13) and the compressed oxidant stream (18) in a combustion chamber (20) and generating a discharge stream (22);
expanding the discharge stream (22) from the combustion chamber (20) and generating an exhaust stream (30) comprising carbon dioxide and electrical energy;
recovering heat from the exhaust stream (30) and generating a recycle stream (52);
mixing the recycle stream (52) with a fresh oxidant (12) and generating the feed oxidant stream (14); and
controlling a pilot ratio based on feedback regarding a plurality of combustor parameters received by a model based control (64) of an exhaust gas recirculation control loop (60).

12. The method of Claim 11, wherein controlling the pilot ratio includes configuring the exhaust gas recirculation control loop (60) to receive feedback related to at least one of a load pressure, a percentage of exhaust gas recirculation, emissions of NOₓ and CO₂ at an exit of the combustor and a firing temperature in the combustion chamber (20) and modifying the pilot ratio of the feed oxidant stream (14) based on the received feedback.

13. The method of Claim 11 or 12, wherein the gas turbine system (15) operates in a partially premix mode or a perfectly premix mode.

14. The method of Claim 11 or 12, wherein the exhaust gas recirculation control loop (60) is configured to minimize NOₓ production and improve flame stability at part load conditions.
